Europäisches Patentamt

European Patent Office

Office européen des brevets

(19)

(11) Numéro de publication: **0 394 131**
**A2**

## (12) DEMANDE DE BREVET EUROPEEN

(21) Numéro de dépôt: **90401056.8**

(22) Date de dépôt: **18.04.90**

(51) Int. Cl.⁵: **B62D 33/02, B61D 9/06**

(30) Priorité: **18.04.89 FR 8905130**

(43) Date de publication de la demande:
**24.10.90 Bulletin 90/43**

(84) Etats contractants désignés:
**AT BE CH DE DK ES FR GB GR IT LI LU NL SE**

(71) Demandeur: **Delmotte, Michel**
**35 rue de Demicourt**
**F-62147 Hermies(FR)**

(72) Inventeur: **Delmotte, Michel**
**35 rue de Demicourt**
**F-62147 Hermies(FR)**

(74) Mandataire: **Kügele, Bernhard**
**NOVAPAT FRANCE 63 bis, boulevard**
**Bessières**
**F-75017 Paris(FR)**

(54) **Surface de chargement pour benne.**

(57) La présente invention concerne une surface de chargement constituée par une tôle centrale (4) présentant deux caissons latéraux (5, 6) se terminant par des pattes latérales (10, 11). Des tôles latérales (2, 3) recouvrent les pattes latérales (11, 10) ainsi que les ouvertures (12, 13) des caissons (5, 6).

L'application : Platelages de bennes, en particulier de bennes basculantes.

Fig. 1

EP 0 394 131 A2

## SURFACE DE CHARGEMENT POUR BENNE.

La présente invention concerne une surface de chargement, en particulier un platelage de benne.

On connaît dans l'état de la technique des platelages de benne constitués par un assemblage de tôles longitudinales repliées latéralement vers le bas pour former un profil s'apparentant sensiblement à un U.

Ce type de platelage est plus particulièrement employé pour la réalisation de bennes destinées au transport de matériaux tels que des gravas, du sable ou des matériaux de construction. De tels matériaux provoquent une érosion rapide des tôles de fond, qui perdent ainsi leur résistance. Pour éviter une telle dégradation, on a proposé dans l'art antérieur d'augmenter l'épaisseur des tôles. L'épaisseur des tôles est toutefois limitée par des problèmes de poids.

L'objet de la présente invention est de proposer un platelage de benne présentant une grande rigidité, sans qu'il soit nécessaire de recourir à des tôles de forte épaisseur.

La présente invention concerne plus particulièrement une surface de chargement, en particulier un platelage de benne constitué par au moins une tôle pliée de façon à présenter un caisson longitudinal. Ce caisson longitudinal assure à la benne, ainsi réalisée, une grande rigidité à la flexion et au gauchissement.

Selon un mode de réalisation avantageux, la surface de chargement est constituée par un assemblage de tôles longitudinales, l'une au moins desdites tôles étant pliée de façon à présenter un caisson longitudinal. De préférence, la tôle centrale est pliée de façon à former deux caissons latéraux longitudinaux et est raccordée de part et d'autre à des tôles latérales. Les caissons latéraux ainsi réalisés ont deux fonctions. D'une part, ils participent à la rigidité du fond de la benne. D'autre part ils constituent des points d'encrage, des moyens d'articulation et de levage de la benne. Le platelage ainsi réalisé évite le recours de pièces rapportées augmentant les coûts de fabrication.

Selon un mode de réalisation préféré, la tôle centrale est pliée de façon à former au moins un caisson latéral ouvert vers le haut, prolongé par une patte latérale disposée dans un plan parallèle à la surface médiane de la tôle. La tôle centrale, ainsi réalisée, est raccordée à une tôle latérale recouvrant la patte latérale et l'ouverture du caisson. Le fond de la benne est ainsi renforcé, au niveau du recouvrement de la patte latérale, par la tôle latérale. Ce raccordement peut être réalisé de façon optimale par soudure.

Selon une variante, la patte latérale est décalée vers le bas d'une épaisseur sensiblement égale à l'épaisseur de la tôle latérale. La surface du fond de la benne est ainsi parfaitement plane.

Avantageusement, la tôle centrale est pliée de façon à former deux caissons symétrique par rapport à l'axe médian, les parois intérieures du caisson étant sensiblement perpendiculaires à la surface médiane de la tôle centrale.

Selon un mode de réalisation particulier, la tôle centrale comporte en outre des renforts transversaux soudés sur la surface inférieure de la partie médiane.

L'invention sera mieux comprise à partir des dessins où :

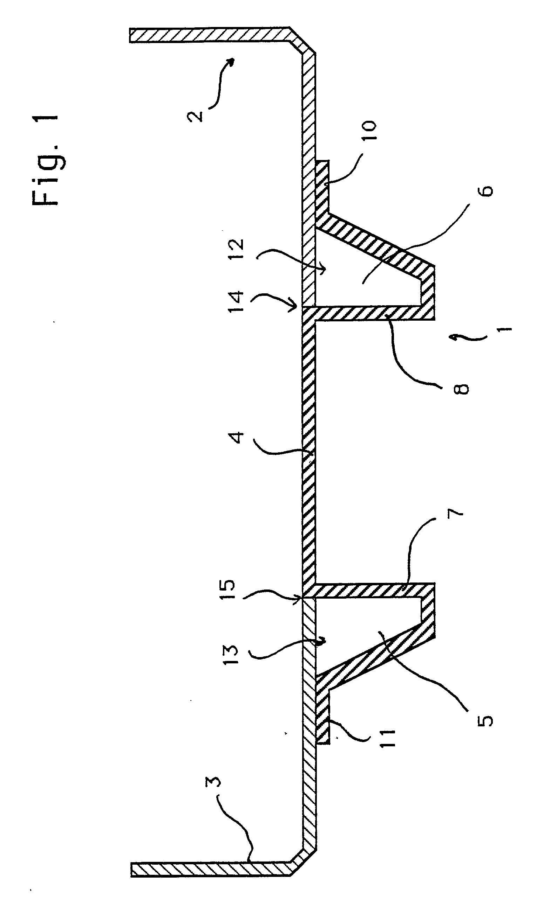

- la figure 1 représente une vue en coupe d'une benne.

La figure 1 représente une vue en coupe d'une benne constituée par une tôle centrale (1) raccordée à deux tôles latérales (2, 3). La tôle centrale (1) présente une surface médiane (4) et deux caissons latéraux (5, 6). Les caissons (5, 6) présentent des parois centrales (7, 8) sensiblement perpendiculaires à la surface médiane (4). La tôle centrale (1) est ensuite pliée pour former des caissons se prolongeant par des pattes latérales (10, 11), les caissons (5, 6) présentent, de ce fait, des ouvertures (12, 13). Les tôles latérales (2, 3) sont soudées d'une part sur les pattes latérales (10, 11) des caissons (5, 6), et d'autre part au niveau des jonctions (14, 15) avec la surface médiane (4) de la tôle centrale (1).

Dans le mode de réalisation décrit à titre d'exemple en figure 1, les surfaces abandonnées, c'est-à-dire les surfaces ne s'appuyant sur aucun élément de renforcement sont extrêmement réduites. Il en résulte une résistance à l'érosion et à la déformation fortement améliorée par rapport aux platelages connus dans l'état de l'art.

La présente invention est décrite dans ce qui précède à titre d'exemple mais n'est en aucune façon limitée à ce mode de réalisation. En particulier, la forme des caissons peut être modifiée sans pour autant sortir du cadre de la présente invention. En particulier, le pliage peut être réalisé de façon à ce que le caisson se referme sous la partie médiane de la tôle centrale, les pattes latérales étant par exemple soudées à la surface inférieure de la partie centrale. Le pliage a été représenté dans l'exemple décrit sur la tôle centrale, mais il est bien évident que le pliage d'une ou des tôles latérales pour former des caissons coopérant avec une tôle centrale plane reproduit l'invention.

### Revendications

1 - Surface de chargement, en particulier platelage de benne, caractérisé en ce qu'elle est constituée par au moins une tôle pliée de façon à présenter un caisson longitudinal (5).

2 - Surface de chargement, en particulier platelage de benne selon la revendication 1, caractérisée en ce qu'elle est constituée par un assemblage de tôles (1, 2, 3) longitudinales, l'une au moins des tôles étant pliée de façon à présenter un caisson longitudinal (5).

3 - Surface de chargement, en particulier platelage de benne selon la revendication 2, caractérisée en ce que la tôle centrale (1) est pliée de façon à former deux caissons latéraux (5, 6) longitudinaux, ladite tôle centrale (1) étant raccordée de part et d'autre à au moins une tôle latérale (2, 3).

4 - Surface de chargement, en particulier platelage de benne selon la revendication 3, caractérisée en ce que la tôle centrale (1) est pliée de façon à former un caisson (5, 6) ouvert vers le haut, prolongé par une patte latérale (10, 11) disposée dans un plan parallèle à la surface médiane (4).

5 - Surface de chargement, en particulier platelage de benne selon la revendication 4, caractérisée en ce que la tôle centrale (1) est raccordée à une tôle latérale (2, 3) recouvrant la patte latérale (10, 11) ainsi que l'ouverture (12, 13) du caisson.

6 - Surface de chargement, en particulier platelage de benne selon la revendication 5, caractérisée en ce que les pattes latérales (10, 11) sont décalées vers le bas d'une épaisseur correspondant sensiblement à l'épaisseur des tôles latérales (2, 3).

7 - Surface de chargement, en particulier platelage de benne selon l'une quelconque des revendications 4 à 6, caractérisée en ce que la tôle centrale (1) est pliée de façon à former deux caissons (5, 6) symétriques par rapport à un axe médian, lesdits caissons (5, 6) présentant des parois centrales (7, 8) sensiblement perpendiculaires à la surface médiane (4).

8 - Surface de chargement, en particulier platelage de benne selon l'une quelconque des revendications précédentes, caractérisée en ce qu'elle comporte des renforts transversaux.

9 - Surface de chargement, en particulier platelage de benne selon l'une quelconque des revendications 1 ou 2, caractérisée en ce que l'une au moins des tôles latérales (2, 3) est pliée de façon à présenter un caisson longitudinal (5).

10 - Surface de chargement, en particulier platelage de benne, caractérisée en ce que ledit caisson (5) est ouvert vers le haut et comporte une patte latérale recouverte par une tôle centrale plane.

Fig. 1